(19) Europäisches Patentamt
European Patent Office
Office européen des brevets

(11) **EP 3 157 220 A1**

(12) **EUROPEAN PATENT APPLICATION**

(43) Date of publication:
**19.04.2017 Bulletin 2017/16**

(51) Int Cl.:
***H04L 27/26*** (2006.01)

(21) Application number: **15189549.7**

(22) Date of filing: **13.10.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Catena Holding bv 2628 XG Delft (NL)**

(72) Inventor: **VAN HOUTUM, Wilhelmus Johannes 5692 GA Son (NL)**

(74) Representative: **Hardingham, Christopher Mark et al**
**NXP SEMICONDUCTORS**
**Intellectual Property Group**
**Abbey House**
**25 Clarendon Road**
**Redhill, Surrey RH1 1QZ (GB)**

(54) **PEAK TO AVERAGE POWER REDUCTION METHOD**

(57)    An apparatus (500) and method (100) of reducing a peak to average power ratio of a multi-carrier signal (200, 300) having at least some carriers for carrying a data payload and at least some non-payload carriers, the method (100) including: detecting (102) a location and value of a maximum amplitude peak (210, 306a) in the multi-carrier signal (200, 300) in the time domain; and processing the signal (200, 300) in order to reduce the value of the maximum amplitude peak (210, 306a) below an amplitude threshold (304), to form a modified multi-carrier signal (204, 308) in the time domain, the modified multi-carrier signal (204, 308) having a lower peak to average power ratio than the original multi-carrier signal (200, 300), wherein the processing generates signal artefacts in the non-payload carriers.

FIG. 5

**Description**

Field

The present disclosure relates to a method for reducing the peak to average power ratio (PAPR) of a multi-carrier signal.

Background

Conventional amplifiers have a generally linear relationship between input power and efficiency, and between input power and output power, during normal operation. With increasing input power, the amplifier is driven into saturation where the relationship between input power and output power is non-linear. It is inefficient to operate an amplifier past the saturation point, where it is no longer linear in its operation.

RF signals often have a high PAPR (sometimes 8dB or higher), especially when used in communications systems. To ensure that an amplifier is operated in the linear region across the whole power range of an RF input signal, the amplifier is operated at input power reduced from the saturation point. This is known as operating the amplifier in back-off mode.

Summary

According to a first aspect, there is provided a method of reducing a peak to average power ratio of a multi-carrier signal having at least some carriers for carrying a data payload and at least some non-payload carriers, the method including: detecting a location and value of a maximum amplitude peak in the multi-carrier signal in the time domain; and processing the signal in order to reduce the value of the maximum amplitude peak below an amplitude threshold, to form a modified multi-carrier signal in the time domain, the modified multi-carrier signal having a lower peak to average power ratio than the original multi-carrier signal, wherein the processing generates signal artefacts in the non-payload carriers.

Reducing the PAPR allows an amplifier used to amplify the signal to operate with reduced back-off. Since the amplifier is operated closer to its saturation point, it can operate at higher efficiency, while still remaining linear over the whole input power range. The method is low complexity and simple to implement, and thus has low processing, and memory requirements.

Detecting a location and value of a maximum amplitude peak in the multi-carrier signal in the time domain may include: analysing the multi-carrier signal to determine a maximum power output in the signal and a time at which the maximum power output occurs.

The signal may comprise a range of frequency components around a central frequency; and wherein the non-payload carriers are formed in the carrier spaced furthest from the central frequency.

The method may include iteratively modifying the multi-carrier signal by repeating the steps of: detecting a location and value of the maximum amplitude peak in an input signal; and processing the signal in order to reduce the value of the maximum amplitude peak below an amplitude threshold. The input signal in the first iteration may be the multi-carrier signal and the output signal from the first iteration is the modified multi-carrier signal; and the input signal for subsequent iterations may be the output signal from the previous iteration.

The method may include, for each iteration, determining if a termination criteria has been reached; if the termination criteria has been reached, providing the output signal of the most recent iteration as a final output, ending the iterative process; and if the termination criteria has not been reached, continuing the iterative process. The termination criteria may include one or more of: a predefined number of iterations; and the value of the maximum amplitude peak being below the amplitude threshold.

Processing the signal in order to reduce the value of the maximum amplitude peak below an amplitude threshold may include: generating a signal clipping vector for reducing the values of the maximum amplitude peak, the signal clipping vector formed of frequency components from the non-payload carriers; and applying the signal clipping vector to the multi-carrier signal in the time domain.

The multi-carrier signal may be an orthogonal frequency-division multiplexing signal.

The amplitude threshold may vary as a function of time, over the duration of the multi-carrier signal.

Only the maximum amplitude peak in the multi-carrier signal may be detected.

According to a second aspect, there is provided a method of amplifying a multi-carrier signal, the method comprising: receiving a multi-carrier signal, the multi-carrier signal having a peak to average power ratio; reducing the peak to average power ratio of the received multi-carrier signal according to the method of the first aspect, to form an amplifier input signal; and amplifying the amplifier input signal.

The amplifier may be operated at back-off, and the method may comprise: reducing the back-off level based on the reduced peak to average ratio of the multi-carrier signal.

According to a third aspect, there is provided a peak to average power reduction apparatus configured to perform the method of the first aspect.

According to a fourth aspect, there is provided an amplifier comprising the peak to average power reduction apparatus of the third aspect, the amplifier configured to perform the method of the second aspect.

According to a fifth aspect, there is provided a computer readable storage medium comprising instructions which cause an apparatus to perform the method of the first aspect of the second aspect.

According to a sixth aspect, there is provided a multi-carrier signal having a peak to average power ratio reduced in accordance with the method of the first aspect of the second aspect.

There may be provided a computer program, which when run on a computer, causes the computer to configure any apparatus, including a circuit, controller, sensor, filter, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as nonlimiting examples. The software implementation may be an assembly program.

The computer program may be provided on a computer readable medium, which may be a physical computer readable medium, such as a disc or a memory device, or may be embodied as a transient signal. Such a transient signal may be a network download, including an internet download.

These and other aspects of the invention will be apparent from, and elucidated with reference to, the embodiments described hereinafter.

Brief description of Drawings

Embodiments will be described, by way of example only, with reference to the drawings, in which

Figure 1 illustrates a method for reducing the PAPR of an input signal;
Figure 2A illustrates an example input signal;
Figure 2B illustrates an example signal clipping vector;
Figure 2C illustrates the example input signal of Figure 2A, modified by the signal clipping vector of Figure 2B;
Figure 3A illustrates an example input signal compliant with the IEEE802.11 standard;
Figure 3B illustrates the signal of Figure 3B, with the PAPR reduced;
Figure 3C illustrates the spectral density of the signals in Figures 3A and Figure 3B;
Figure 4A illustrates the back-off reduction that can be achieved with a reduced PAPR over 1500 iterations; and
Figure 4B illustrates the first 50 iterations of Figure 4A.
Figure 5 illustrates a PAPR apparatus that is arranged to implement the method of Figure 1.

Detailed description of embodiments

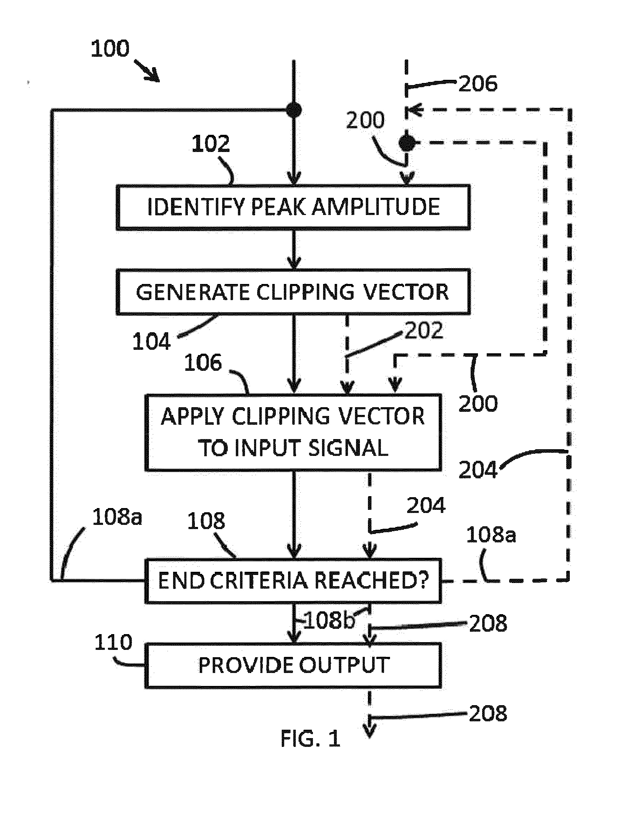

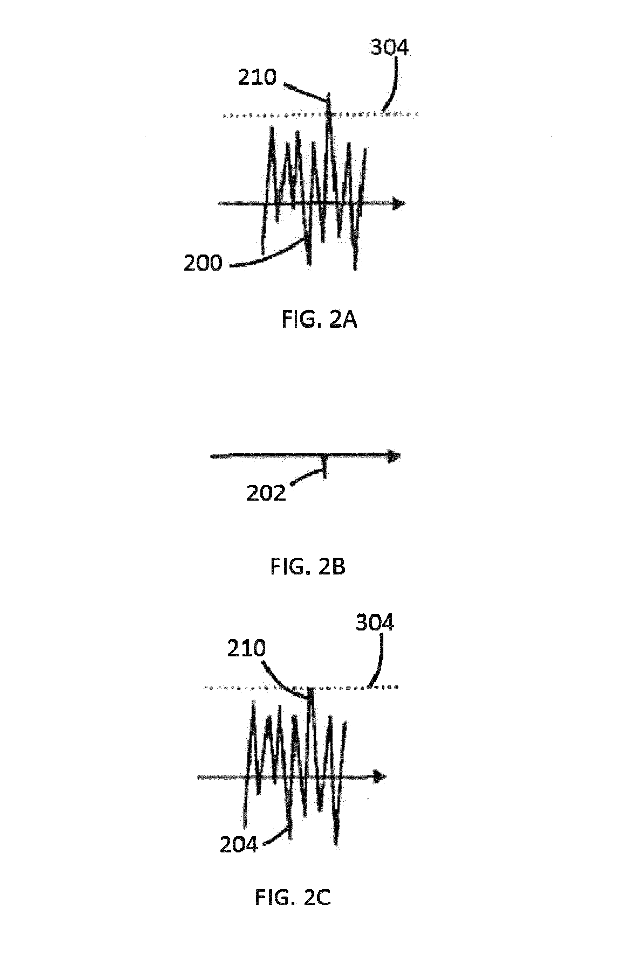

Figure 1 and Figure 2 illustrate a method 100 for reducing the PAPR of a signal to be amplified 206. The signal to be amplified 206 is a multi-carrier signal having at least some carriers used for delivering a data payload, and some sub-carriers not used for delivering the data payload. The carriers not used for the data payload may be referred to as unused carriers, null carriers, non-payload carriers or reserved tones. It will be understood that these terms may be used interchangeably. However, for simplicity, the carriers not used for data payload will be referred to as unused carriers in the below description.

The carriers unused for payload may have their value set to zero before PAPR reduction, or may have any other suitable value. While not used for data payload, the carriers may still have other uses in the signal.

The dashed arrows in Figure 1 indicate which signals are used and passed on in the different steps of the method 100. In general, the method takes a signal to be amplified 206, reduces the PAPR of the signal 206, and provides a modified signal to be amplified 208. The input signal is a time slice taken from a longer input signal and the method 100 is repeated for every time slice of the input signal.

The PAPR is reduced by processing the signal to reduce the amplitude of a maximum peak 210 in the signal 206. This process is sometimes referred to as clipping. The processing creates signal artefacts, sometimes referred to as clipping noise.

The first step of the method 100 is identifying 102 the time and amplitude of the peak 210 in an input signal 200.

The next step is generating 104 a signal clipping vector 202 based on the identified peak 210 of the input signal 200. The signal clipping vector 202 is a signal that, when applied to the input signal 200, reduces the amplitude of the peak 210. The signal clipping vector 202 is formed in the unused sub-carriers, and has sufficient amplitude to reduce the amplitude of the peak to below a PAPR threshold 304. In this example, the PAPR threshold is constant across the bandwidth of the signal.

In a third step, the signal clipping vector 202 is applied 106 to the input signal 200, to reduce the magnitude of the identified peak 210 to form a modified output signal 204.

Figures 2A, 2B and 2C show schematic examples of clipping. Figure 2A shows an example of an input signal 200, having a peak 210. Figure 2B shows an example of the signal clipping vector 202 generated to reduce the amplitude of the peak 210. Figure 2C shows the output signal 204 resulting from applying the signal clipping vector 202 to the input signal 200. In the output signal 204, the peak 210 has a reduced amplitude compared to the input signal 200, and is reduced below the PAPR threshold.

The method then checks 108 if an end criterion has been reached. If an end criterion has not been reached 108a, the method 100 continues by returning to the first step 102. The modified output signal 204 is used as the input signal 200 in the next iteration instead of the signal to be amplified 206. If an end criterion has been reached 108b, the method 100 ends by providing 110 the output signal 204 from the previous step 106, as the output signal to be amplified 208.

The process 100 for reducing the peak to average ratio is iterative. For the first iteration, the input signal to be amplified 206 is taken as the input signal 200. For subsequent iterations, the input signal 200 is the output signal 204 from the previous iteration. Over the iterations, further signal clipping vectors 202 are generated, adding to the clipping noise in the unused sub-carriers.

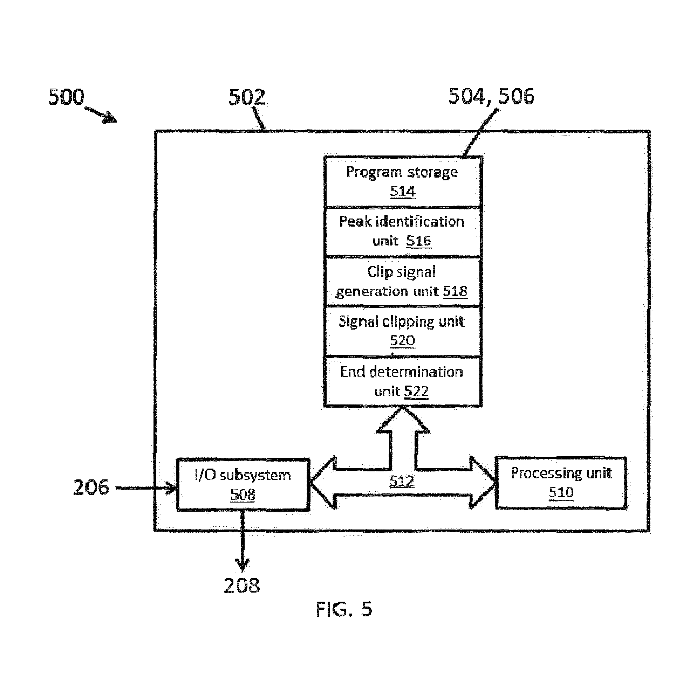

The output signal to be amplified 208 is provided to an amplifier (not shown). The amplifier can be part of a transmitter or receiver (not shown). The method 100 is carried out by a PAPR apparatus 500, as shown in Figure 5. The PAPR apparatus 500 includes processing circuitry 502. The processing circuitry 502 incudes a hard drive 504, memory 506, an I/O subsystem 508, and a processing unit 510. The hard drive 504, memory 506, I/O subsystem 508, and processing unit 510 communicate with each other via a system bus 512.

The processing unit 510 may be any suitable processor, and the system bus 512 may include any suitable system bus.

It will be appreciated that although reference is made to a memory 506, it is possible that the memory could be provided by a variety of devices. For example, the memory 506 may be provided by a cache memory, a RAM memory, a local mass storage device such as the hard disk 504, any of these connected to the processing circuitry 510 over a network connection. However, the processing unit 510 can access the memory via the system bus 512 to access program code to instruct it what steps to perform. The processing unit 510 is arranged to process the data as outlined by the program code.

Figure 5 shows a schematic diagram of the memory 506. The memory 506 comprises a program storage portion 514 dedicated to program storage. The program storage portion comprises a peak identification unit 516, a clip signal generation unit 518, a signal clipping unit 520, and an end determination unit 522.

The peak identification unit 516 determines the location and amplitude of the maximum peak 102, the clip signal generation unit 518 generates 104 the signal clipping vector 202, the signal clipping unit 520 applies 106 the signal clipping vector 202 to the input signal 200, and the end determination unit 522 determines if an end criteria has been reached 108. The end determination unit 522 may include an iteration counter.

In general, the signal to be amplified 206 is received through the I/O subsystem 508. The signal is then processed, and the output signal 208 is provided to an amplifier (not shown) through the I/O subsystem.

In one example, the signal to be amplified 206 may be provided from signal generation or signal emulation circuitry, and provided to a transmitting antenna after amplification. In another amplification, the signal to be amplified 206 may be received from a receiving antenna, and then provided for further processing after amplification. The PAPR apparatus may be part of the amplifier, or the transmitter or receiver including the amplifier.

The method 100 can determine that an end criterion has been reached 108 if all peaks in the signal 204 are reduced below the PAPR threshold 304. Therefore, it will be appreciated that, in some situations, there may only be a single iteration. Alternatively, the method 100 can determine that an end criterion has been reached after a predetermined number of iterations, for example, 10 iterations, 100 iterations, 1000 iterations or any other number of iterations. The method 100 can also determine an end criterion has been reached if there is no further reduction in the PAPR. In some examples, this criterion may be reached if the PAPR stays constant for a predetermined number of iterations (for example, one or more iterations). In other examples, this criterion may be reached if the PAPR increases, or reduces by an amount below a threshold for the predetermined number of iterations.

In some examples, only one of the end criteria may be applied. However, in other examples, all or some of the criteria may be applied. For example, if all peaks are sufficiently reduced before the threshold number of iterations is reached, the method is stopped, or the method is stopped at the threshold number of iterations, regardless of the peak values.

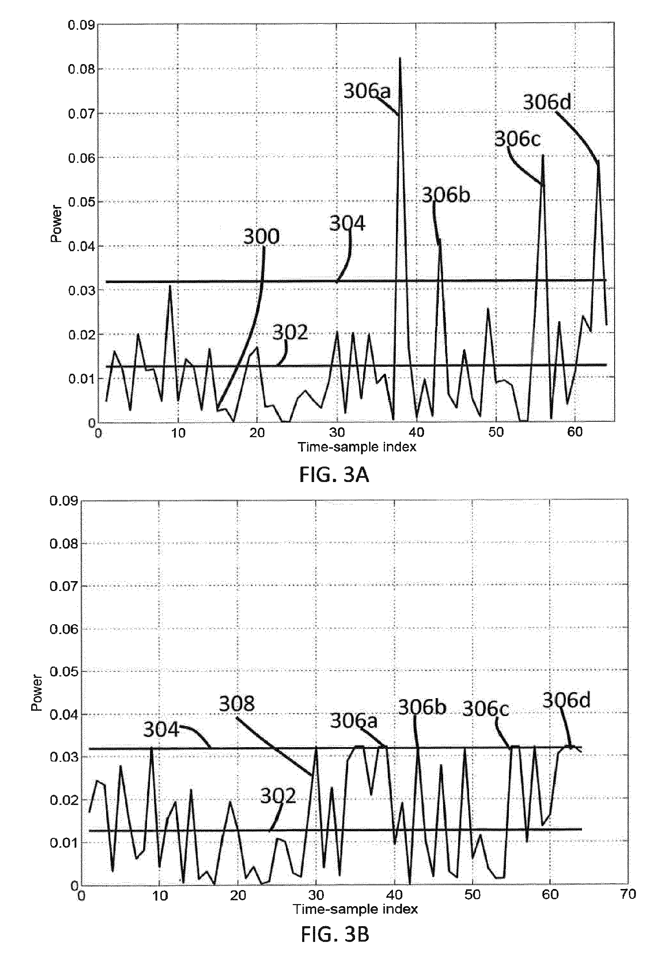

The signals shown in Figures 2A to 2C are simplified signals shown for illustrative purposes only. Figure 3A shows an input signal 300 to be amplified that is compliant with the IEEE802.11x standard. The input signal 300 to be amplified is a 3.2 microsecond time slice. The IEEE802.11x standard defines an orthogonal frequency-division multiplexing (OFDM) multi-carrier signal having a frequency band-width used for the signal.

OFDM systems are block-based systems, each block (carrier), for example having a length of N complex time domain samples ($x_i$), or N frequency domain samples ($X_i$). In the IEEE 802.11x standard, blocks of unused carriers are defined at the highest and lowest frequencies in the bandwidth.

An OFDM symbol that is compliant with the IEEE802.11x standard may be represented by a signal vector ($\underline{x}$ in the time domain, $\underline{X}$ in the frequency domain), given by:

$$\underline{x} = [x_1, x_2, \dots x_N] \tag{1a}$$

$$x_n = \mathrm{F}^{-1}\{\underline{X}\} = \mathrm{F}^{-1}\{[X_1, \cdots, X_k, \cdots X_N]\}, \quad k \in [1, \cdots, N] \tag{1b}$$

Where F is the discrete Fast Fourier transform (FFT) matrix. The PAPR for each such OFDM-symbol is given by:

$$\mathrm{PAPR} \cong \frac{\max_n |x_n|^2}{\mathrm{E}\{|x_n|^2\}}, \quad n \in [1, \cdots, N]. \tag{2a}$$

$$\mathrm{PAPR}|_{dB} \cong 10 \log_{10} \frac{\max_n |x_n|^2}{\mathrm{E}\{|x_n|^2\}} \tag{2b}$$

$$= 10 \log_{10} \max_n |x_n|^2 - 10 \log_{10} \mathrm{E}\{|x_n|^2\}, \quad n \in [1, \cdots, N]$$

In IEEE802.11x, there are 64 blocks (N = 64), of which 11 are not used for the data payload.

As shown in Figures 2A to 2C, the effect of one clip on a peak is an impulse at the position of the clip, d, which has a clipping-amplitude $\alpha_d$ equal to the amount the signal is over the PAPR threshold at that position. The clipped time-domain signal-vector, $y[n]$, can be decomposed into the unclipped signal, $y_s[n]$, and the clip signal, $y_c[n]$:

$$y[n] \cong y_s[n] + y_c[n] = y_s[n] + \alpha_d \cdot \delta[n - d] \tag{3}$$

where $\delta[\cdot]$ is the Kronecker-delta function, and n is the index of the time sample.

The sum of the impulse due to the clip signal and the original vector is transformed to the frequency-domain by an FFT-operation. Based on the linearity-property of the FFT, the FFT can be given as:

$$Y[k] \cong \mathrm{F}\{y[n]\} = \mathrm{F}\{y_s[n] + y_c[n]\}$$
$$= \mathrm{F}\{y_s[n]\} + \mathrm{F}\{y_c[n]\} \cong Y_s[k] + Y_c[k] \tag{4}$$

Setting the samples used for data payload in $Y[k]$ their original values $Y_s[k]$, is approximately equivalent to doing nothing to $Y_s[k]$, and setting all of the samples used for data payload to zero in $Y_c[k]$. Therefore, the FFT can be approximated to:

$$\tilde{Y}[k] \cong Y_s[k] + Y_c[k]|_{\text{set to 0}} \tag{5}$$

Setting all of the samples used for data payload to zero in $Y_c[k]$ is equivalent to multiplying the FFT of the clip FFT by a binary function, $S[k]$, which is zero for the samples used for data payload and one otherwise. This is also known as the indicator function. The inverse FFT (IFFT) of the indicator function is known as the time domain shaping function. Using the indicator function, the clipped signal can be approximated as:

$$\tilde{Y}[k] = Y_s[k] + Y_c[k] \times S[k] \tag{6}$$

The multiplication of the clipped signal in the frequency domain, and the indicator function should approximate clipped signal in the time domain $y_c[n]$.

Performing in IFFT on the clipped signal in the frequency domain yields an approximation of the clipped signal in the time domain:

$$\begin{aligned}
\tilde{y}[n] &\cong F^{-1}\{\tilde{Y}[k]\} = F^{-1}\{Y_s[k] + Y_c[k] \times S[k]\} \\
&= F^{-1}\{Y_s[k]\} + F^{-1}\{Y_c[k] \times S[k]\} \\
&= y_s[n] + y_c[n] \circledast s[n]
\end{aligned} \tag{7}$$

Where $\circledast$ means circular convolution.

The circular convolution of the clip signal and the shaping function gives the signal clipping vector 202 used in the method 100.

By evaluation of equation (3), and substitution into equation (7), the effect of a clip is to add the shaping function, scaled by the clip-amplitude and circularly shifted to the location of the clip:

$$\begin{aligned}
\tilde{y}[n] &= y_s[n] + y_c[n] \circledast s[n] \\
&= y_s[n] + \alpha_d \cdot \delta[n-d] \circledast s[n] \\
&= y_s[n] + \alpha_d \cdot s[n-d]
\end{aligned} \tag{8}$$

The clip signal $y_c[n]$ includes components in samples used for data payload. Multiplication of the clipped signal by the indicator function to yield the signal clipping vector 202 limits the clip signal to the unused samples. However, the signal clipping vector 202 is an approximation of the original clip signal. Therefore, it may not have the same effect on the unclipped signal as the clip signal. For example, the peak may not be reduced by such a large magnitude, or other peaks may have increased or decreased magnitude.

The clip signal can be generated in any suitable manner. For example, the clip signal may be generated from look-up tables, or may be calculated from the original signal.

In each iteration of the method 100 of Figure 1, a signal clipping vector is generated to reduce the magnitude of the maximum peak only, and no other peaks are detected. Therefore, once the maximum peak is detected, the detection process is stopped, and the method 100 moves on to generating 104 the signal clipping vector 202. This process is called the Maximum Fourier Projection Algorithm (MFPA).

Figure 3B shows the reduced PAPR signal 308 derived from the processing of the signal of Figure 3A, in accordance with the method 100 of Figure 1. The signal 308 of Figure 3B is calculated from 1500 iterations of the method. Comparison of Figure 3A and Figure 3B shows a number of features:

- Before the MFPA, four peaks 306 are above the PAPR threshold 304, and the PAPR is 8.11dB;
- After the MFPA, the peaks 306 are significantly reduced in amplitude, and the PAPR is reduced to 3.16 dB. This reduction of 4.95 dB allows an amplifier amplifying the signal to operate at reduced back-off; and
- It is not only the peaks above the PAPR threshold 304 that have been altered. The clipping also alters the other peaks, but the content of the data payload is unchanged. This is because the signal clipping vector 202 in each iteration is an approximation of the clip signal.

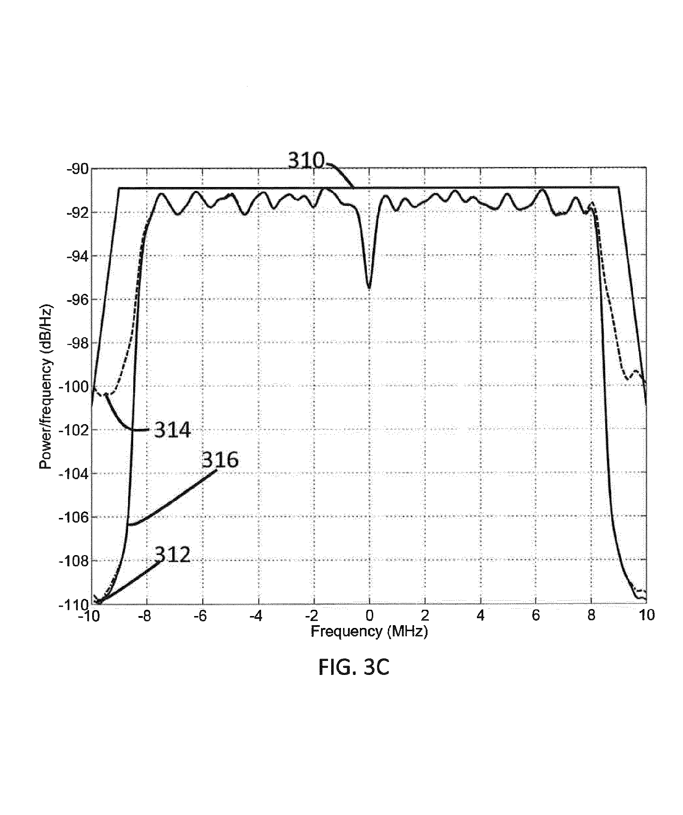

Figure 3C shows the spectral density of the multi-carrier signal. The x-axis shows the variation from the central frequency of the bandwidth. The uppermost solid curve 310 shows the spectral mask used for the signal.

The lower dashed curve 312, which has low spectral density at the edges of the bandwidth of the signal, shows the spectral density of a signal amplified by an amplifier with an initial back-off of 8dB, without the MFPA PAPR reduction.

The lower solid curve 316 is a reference-curve showing the structure of the signal with the amplifier off, i.e., without non-linear distortion at all. The difference between the mask 310 and the lower dashed curve 312 or lower solid curve 316, shows the unused carrier at the highest and lowest frequencies.

The upper dashed curve 314, which shows high spectral density at the edges, shows the spectral density after the MFPA is applied, and the IBO has been reduced accordingly.

As can be seen, MFPA processing keeps the data carriers (i.e. frequency between ~-8 MHz and +8 MHz) unchanged. This means that the data payload is unchanged. However, because of the clipping noise, the signal in the unused carriers is increased.

In other examples of the MFPA, more than just the maximum peak may be processed in each iteration. For example, the signal clipping vector 202 may be generated to reduce the amplitude of the highest two peaks, the highest three peaks or more. Alternatively, the MFPA may look at the highest peak, and the third highest peak, or other similar variations. As discussed above, only the peaks required for the processing are detected. Once the required peaks are detected, the detection process is stopped, and no other peaks are found.

In an example of a different, process, the signal clipping vector 202 generated in each iteration is designed to reduce the value of all peaks above the PAPR threshold 304. This technique is known as the Fourier-Projection Algorithm (FPA). The MFPA, on the other hand, does not look at all peaks above the PAPR threshold 304, but only a subset. The FPA does not identify the location and amplitude of the maximum peak(s), but simply finds all peaks above the PAPR threshold 304.

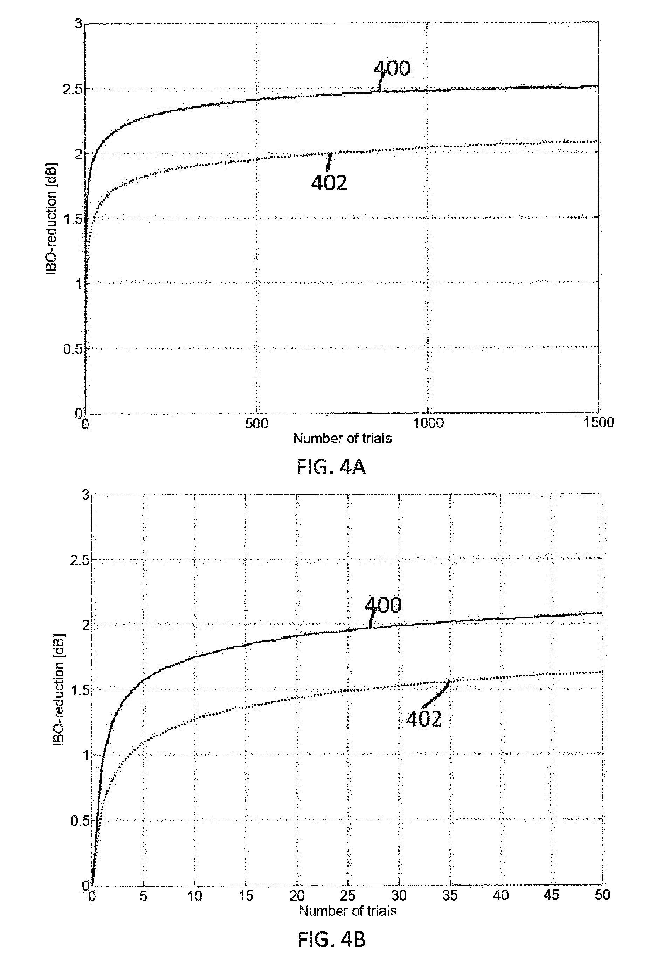

Figure 4A shows the input back-off (IBO) reduction that can be achieved for an amplifier amplifying a signal with the PAPR reduced by the MFPA or FPA. The IBO reduction is shown as a function of the number of iterations (trials) up to fifteen hundred iterations. A first curve 400 is the result for the FPA, while the second 402, is for the MFPA. The back-off reduction is based on an amplifier with an initial back-off of 8dB.

Over a fixed number of iterations, the FPA provides a larger back-off reduction than the MFPA. Furthermore, both techniques show an exponential behaviour for the reduction, such that the largest reduction in back-off is for the first few trials. Figure 4B shows the IBO reduction for the first 50 trials, for the FPA and MFPA.

From Figure 4B, it can be seen that in 4 iterations, the FPA reaches an IBO-reduction $\approx$ 1.5 dB, which is a common requirement for the PAPR-reduction algorithms. In 4 iterations, the IBO reduction achieved by the MFPA is $\approx$ 1 dB. To achieve an IBO reduction of $\approx$ 1.5 dB, the MFPA requires 27 iterations. In the same number of iterations, the FPA can reach a IBO reduction of $\approx$ 2 dB.

Furthermore, with the same number of trials the MFPA introduces more noise than the FPA, as demonstrated by the MFPA curve 402 being below the FPA curve 400. However, the FPA requires more corrections per iteration than the MFPA, making the FPA significantly more complex. The FPA is also more complex because more peaks have to be detected. In the MFPA, only a fixed number of peaks is found, whilst in FPA, the whole signal must be analysed to find all peaks above the PAPR threshold. The lower complexity of the MFPA results in low processing requirements. This saving is maximised when only the maximum peak is considered in each iteration. Furthermore, neither MFPA nor FPA require significant memory, as they use the outputs from previous iterations as the inputs for the next iteration, and are not required to store the original input signal to be amplified 206.

Based on the above, there will be situations where the FPA technique is advantageous, and other situations where the MFPA technique is advantageous. Where it is desired to achieve high levels of IBO reduction, and/or low levels of clipping noise and/or processing power is not a significant factor, then the FPA is used. However, where processing power is limited, and/or a lower level of IBO reduction is required, the MFPA is used.

In the example described above, the MFPA is performed in each iteration. However, it will be appreciated that in other examples, some iterations may use the FPA, and other iterations may use the MFPA.

The above examples are described with respect to the IEEE802.11x wireless standard. However, it will be appreciated that the signal to be amplified may be any suitable signal having some non-payload carriers. The signal may be compliant with any suitable standard.

In the examples discussed above, the PAPR threshold is constant as a function of frequency. However, it will be appreciated that in some examples, the PAPR threshold may vary as a function of frequency and/or time. The variation can be linear or non-linear. In some examples, the variation can be based on the transfer function of the amplifier that is used to amplify the PAPR reduced signal to be amplified 208.

Where the PAPR threshold 304 varies as a function of the amplifier transfer function, a further end criteria may be used, based on the means square error of the signal. In this case, the iterative method 100 may be stopped if the mean square error is below a threshold value.

In the examples discussed above, the clipping noise is formed entirely in carriers not used for the data payload. It will be appreciated that in some examples, the clipping noise may be formed of only one unused carrier, or in other examples, more than one unused carrier. The clipping noise may also have a varying amplitude across the unused sub-carriers. Furthermore, in some examples, the clip signal may include some components in carriers used for data payload, provided that the effect on the content of the data payload is negligible.

It will further be appreciated that although the examples discussed above and shown in Figures 2A, 2B, 2C, 3A and 3B only discuss the signal and PAPR in terms of a positive signal, and peaks above the PAPR threshold, the signals may also include a negative component and a negative PAPR threshold. In general, it should be considered that the method 100 reduces the absolute value of the peaks above the PAPR threshold.

The PAPR apparatus 500 shown in Figure 5 and discussed above is shown by way of example only. Any suitable apparatus may be used for carrying out the method 100, and various different apparatuses and modification will be apparent to the person skilled in the art.

From reading the present disclosure, other variations and modifications will be apparent to the skilled person. Such variations and modifications may involve equivalent and other features which are already known in the art, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

**Claims**

1. A method of reducing a peak to average power ratio of a multi-carrier signal having at least some carriers for carrying a data payload and at least some non-payload carriers, the method including:

   detecting a location and value of a maximum amplitude peak in the multi-carrier signal in the time domain; and processing the signal in order to reduce the value of the maximum amplitude peak below an amplitude threshold, to form a modified multi-carrier signal in the time domain, the modified multi-carrier signal having a lower peak to average power ratio than the original multi-carrier signal, wherein the processing generates signal artefacts in the non-payload carriers.

2. The method of claim 1, wherein detecting a location and value of a maximum amplitude peak in the multi-carrier signal in the time domain includes:

   analysing the multi-carrier signal to determine a maximum power output in the signal and a time at which the maximum power output occurs.

3. The method of claim 1 or claim 2, wherein the signal comprises a range of frequency components around a central frequency; and wherein the non-payload carriers are formed in the carrier spaced furthest from the central frequency.

4. The method of any preceding claim, including iteratively modifying the multi-carrier signal by repeating the steps of:

   detecting a location and value of the maximum amplitude peak in an input signal; and processing the signal in order to reduce the value of the maximum amplitude peak below an amplitude threshold, wherein the input signal in the first iteration is the modified multi-carrier signal and the output signal from the first iteration is the modified multi-carrier signal; and wherein the input signal for subsequent iterations is the output signal from the previous iteration.

5. The method of claim 4, including:

   for each iteration, determining if a termination criteria has been reached;

if the termination criteria has been reached, providing the output signal of the most recent iteration as a final output, ending the iterative process; and
if the termination criteria has not been reached, continuing the iterative process,
wherein the termination criteria includes one or more of: a predefined number of iterations; and the value of the maximum amplitude peak being below the amplitude threshold.

6. The method of any preceding claim, wherein processing the signal in order to reduce the value of the maximum amplitude peak below an amplitude threshold includes:

generating a signal clipping vector for reducing the values of the amplitude peaks, the one or more signal clipping vectors formed of frequency components from the non-payload carriers; and
applying the signal clipping vector to the multi-carrier signal in the time domain.

7. The method of any preceding claim, wherein the multi-carrier signal is an orthogonal frequency-division multiplexing signal.

8. The method of any preceding claim, wherein the amplitude threshold varies as a function of time, over the duration of the multi-carrier signal.

9. The method of any preceding claim, wherein only the maximum amplitude peak in the multi-carrier signal is detected.

10. A method of amplifying a multi-carrier signal, the method comprising:

receiving a multi-carrier signal, the multi-carrier signal having a peak to average power ratio;
reducing the peak to average power ratio of the received multi-carrier signal according to the method of any preceding claim, to form an amplifier input signal; and
amplifying the amplifier input signal.

11. The method of claim 10, wherein the amplifier is operated at back-off, the method comprising:

reducing the back-off level based on the reduced peak to average ratio of the multi-carrier signal.

12. A peak to average power reduction apparatus configured to perform the method of any of claims 1 to 9.

13. An amplifier comprising the peak to average power reduction apparatus of claim 12, the amplifier configured to perform the method of claim 10 or claim 11.

14. A computer readable storage medium comprising instructions which cause an apparatus to perform the method of any of claims 1 to 11.

15. A multi-carrier signal having a peak to average power ratio reduced in accordance with the method of any of claims 1 to 11.

100

206

200

102

IDENTIFY PEAK AMPLITUDE

GENERATE CLIPPING VECTOR

104

106

202

200

APPLY CLIPPING VECTOR
TO INPUT SIGNAL

204

108a

108

204

108a

END CRITERIA REACHED?

108b

208

110

PROVIDE OUTPUT

208

FIG. 1

FIG. 2A

FIG. 2B

FIG. 2C

FIG. 3A

FIG. 3B

FIG. 3C

FIG. 4A

FIG. 4B

FIG. 5

Europäisches
Patentamt

European
Patent Office

Office européen
des brevets

# EUROPEAN SEARCH REPORT

Application Number

EP 15 18 9549

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/112496 A1 (DEVLIN CAROLE [IE] ET AL) 15 May 2008 (2008-05-15) <br> * paragraph [0005] - paragraph [0009] * <br> * paragraph [0020] * <br> * paragraph [0067] - paragraph [0085] * <br> ----- | 1-15 | INV. <br> H04L27/26 |
| X | CHIN-LIANG WANG ET AL: "A peak-to-average power ratio reduction technique for the IEEE 802.11a wireless LAN", VEHICULAR TECHNOLOGY CONFERENCE, 2003. VTC 2003-FALL. 2003 IEEE 58TH ORLANDO, FL, USA 6-9 OCT. 2003; [IEEE VEHICULAR TECHNOLGY CONFERENCE], PISCATAWAY, NJ, USA,IEEE, US, vol. 4, 6 October 2003 (2003-10-06), pages 2287-2291, XP010702985, DOI: 10.1109/VETECF.2003.1285937 ISBN: 978-0-7803-7954-1 <br> * paragraph [00OI] - paragraph [00IV] * <br> ----- | 1-5,7-15 | |
| X | US 2009/092195 A1 (GUO NING [CA] ET AL) 9 April 2009 (2009-04-09) <br> * paragraph [0006] * <br> * paragraph [0012] - paragraph [0015] * <br> * paragraph [0022] - paragraph [0044] * <br> ----- | 1,2,4-8, 10-15 | TECHNICAL FIELDS SEARCHED (IPC) <br><br> H04L |
| X | US 7 292 639 B1 (DEMIREKLER LEVENT [US] ET AL) 6 November 2007 (2007-11-06) <br> * column 3, line 10 - column 4, line 39 * <br> ----- | 1,2,4-8, 10-15 | |

The present search report has been drawn up for all claims

| Place of search | Date of completion of the search | Examiner |
|---|---|---|
| The Hague | 16 March 2016 | Baas, Gert-Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 18 9549

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2016

| Patent document cited in search report | | | Publication date | Patent family member(s) | | | Publication date |
|---|---|---|---|---|---|---|---|
| US 2008112496 | A1 | | 15-05-2008 | NONE | | | |
| US 2009092195 | A1 | | 09-04-2009 | CN | 101861720 | A | 13-10-2010 |
| | | | | EP | 2206307 | A1 | 14-07-2010 |
| | | | | EP | 2541860 | A2 | 02-01-2013 |
| | | | | JP | 5317302 | B2 | 16-10-2013 |
| | | | | JP | 2010541431 | A | 24-12-2010 |
| | | | | KR | 20100058638 | A | 03-06-2010 |
| | | | | US | 2009092195 | A1 | 09-04-2009 |
| | | | | US | 2013329817 | A1 | 12-12-2013 |
| | | | | WO | 2009043172 | A1 | 09-04-2009 |
| US 7292639 | B1 | | 06-11-2007 | NONE | | | |

EPO FORM P0459

For more details about this annex : see Official Journal of the European Patent Office, No. 12/82